# EUROPÄISCHE PATENTSCHRIFT

(11) **EP 3 483 004 B1**
(45) Veröffentlichungstag und Bekanntmachung des Hinweises auf die Patenterteilung: **26.06.2024**
(21) Anmeldenummer: 18205399.1
(22) Anmeldetag: 09.11.2018
(51) Int. Cl.: F41H 7/02, B60P 3/12, B62D 53/08

(54) **BERGEVORRICHTUNG FÜR EIN MILITÄRISCHES FAHRZEUG**
SALVAGING DEVICE FOR A MILITARY VEHICLE
DISPOSITIF DE SAUVETAGE POUR UN VÉHICULE MILITAIRE

(30) Priorität: 10.11.2017 DE 102017126409
(43) Veröffentlichungstag der Anmeldung: 15.05.2019
(73) Patentinhaber: Krauss-Maffei Wegmann GmbH & Co. KG, 80997 München (DE)
(72) Erfinder: Baus, Rüdiger, 80997 München (DE); Weingärtner, Kai, 80997 München (DE)
(74) Vertreter: Feder Walter Ebert

(56) Entgegenhaltungen:
- DE-B- 1 247 875
- US-A- 4 429 892
- US-A- 4 840 534
- US-A- 5 249 911
- US-B2- 8 690 514

## Beschreibung

Die vorliegende Erfindung betrifft eine Bergevorrichtung zur Anordnung auf einem Bergefahrzeug, insbesondere auf dem Heck eines militärischen Bergefahrzeugs, mit einem Bergearm zum Anheben eines havarierten Fahrzeugs und einem Stützgelenk zur gelenkigen Abstützung des Bergearms auf dem Bergefahrzeug. Des Weiteren betrifft die Erfindung ein Bergefahrzeug und ein Verfahren zur Bergung eines havarierten Fahrzeugs mit einer solchen Bergevorrichtung.

Bei Fahrzeugen, die nicht mehr fähig sind, ihre Fahrt selbstständig fortzusetzen, wird üblicherweise ein zweites funktionstüchtiges Fahrzeug mit diesem liegengebliebenen Fahrzeug verbunden, so dass das liegengebliebene Fahrzeug an einen anderen Ort, beispielsweise in eine Werkstatt zur Reparatur, verbracht werden kann. Solange das liegengebliebene Fahrzeug dabei selbst noch rollfähig ist, kann nahezu jedes andere Fahrzeug mittels Abschleppvorrichtungen, wie Abschleppseilen, Abschleppstangen oder dergleichen dazu genutzt werden, das liegengebliebene Fahrzeug abzuschleppen.

Durch Unfälle oder andere äußere Einwirkungen auf das Fahrzeug, wie beispielsweise durch Minendetonationen oder dergleichen, kann es zu derart starken Beschädigungen kommen, dass das Fahrzeug selbst nicht mehr manövrierfähig ist. In einem solchen Fall wird dann von einem havarierten Fahrzeug gesprochen. Ein derartig havariertes Fahrzeug kann nicht mittels gewöhnlicher Abschleppvorrichtungen in einem Verbund zweier Fahrzeuge abgeschleppt werden, beispielsweise wenn eine lenkbar ausgebildete Vorderachse abgerissen ist oder ähnlich Beschädigungen vorliegen.

Zur Bergung eines solchen havarierten Fahrzeugs kommen speziell ausgerüstete Bergefahrzeuge zum Einsatz, die mit geeigneten Bergevorrichtungen ausgestattet sind. Diese Bergevorrichtungen weisen üblicherweise einen über ein Stützgelenk am Bergefahrzeug angelenkten Bergearm auf, mit dem das havarierte Fahrzeug hinter dem Bergefahrzeug angehoben wird. Bei relativ leichten havarierten Fahrzeugen, wie beispielsweise PKWs, kann durch den Bergearm das gesamte Fahrzeug angehoben und abtransportiert werden. Gerade bei schwereren Fahrzeugen, wie sie beispielsweise im militärischen Bereich anzutreffen sind, lässt sich ein vollständiges Anheben des havarierten Fahrzeugs häufig nicht realisieren. Zumeist wird das havarierte Fahrzeug über den Bergearm front- oder heckseitig angehoben und in dieser Stellung dann abtransportiert. Ein Teil des Gewichts des havarierten Fahrzeugs wird dabei über den Bergearm und das Stützgelenk auf dem Heck des Bergefahrzeugs abgestützt.

Eine derartige Bergevorrichtung ist beispielsweise aus der US 8,690,514 B2 bekannt, die einen Bergearm zeigt, der um eine vertikale Achse gedreht und zur Anhebung des havarierten Fahrzeugs um eine horizontale Achse verschwenkt werden kann.

Diese Bergevorrichtung hat sich auf ebenen und gut befestigten Straßen bewährt. Im unbefestigten Gelände und unter militärischen Einsatzbedingungen, bei denen größtenteils, wenn überhaupt, nur wenig befestigte und unebene Straßen zur Verfügung stehen, erweist sich diese Bergevorrichtung jedoch als nachteilig. Denn gerade in unebenem Gelände kann es bei dem über die Bergevorrichtung gekoppelten Gespann aus Bergefahrzeug und havariertem Fahrzeug zu größeren Relativbewegungen zwischen den Fahrzeugen kommen, die über den Bergearm von dem einen auf das andere Fahrzeug übertragen werden. Dies kann zum einen zu einer Beschädigung der Bergevorrichtung führen. Zum anderen werden hierdurch das Fahrverhalten und die Stabilität des Bergefahrzeugs nachteilig beeinflusst. So kann es zu einem Kippen und im Extremfall sogar zu einem Umkippen des Bergefahrzeugs kommen. In der DE1247875B wird eine Lösung zu diesem Problem vorgeschlagen.

Die **Aufgabe** der vorliegenden Erfindung liegt daher darin, eine Bergevorrichtung anzugeben, die sich auch für eine Verwendung im unbefestigten Gelände eignet.

Diese Aufgabe wird bei einer Bergevorrichtung der eingangs genannten Art durch die Merkmale des Anspruchs1 gelöst.

Der Bergearm ist über ein Stützgelenk um mindestens drei Achsen beweglich gegenüber dem Bergefahrzeug lagerbar. Durch die Beweglichkeit des Bergearms um mindestens drei Achsen werden auch bei Fahrt im unwegsamen Gelände keine Momente von dem havarierten Fahrzeug auf das Bergefahrzeug übertragen, sondern lediglich die für das Schleppen erforderlichen Kräfte, wodurch das Fahrverhalten und die Stabilität des Bergefahrzeugs sowie des Gespanns verbessert werden.

Gleichzeitig kann ein Teil der zum Anheben des havarierten Fahrzeuges erforderlichen Kraft durch die starre Anbindung direkt am havarierten Fahrzeug abgestützt werden. Hierdurch kann die in das Heck des Bergefahrzeugs eingeleitete Stützkraft und damit eine Achslastzunahme an den hinteren Achsen des Bergefahrzeugs reduziert werden, da zum Anheben des havarierten Fahrzeuges die Stützkraft durch den verlängerten Hebelarm bezogen auf eine noch auf dem Boden aufstehende Achse des havarierten Fahrzeuges verstärkt wird. Insbesondere kann das Stützgelenk nach Art eines Abstützpunktes ausgebildet sein.

Erfindungsgemäß ist das Stützgelenk entlang einer Verschieberichtung verschiebbar.

Durch axiales Verschieben kann die Position der Krafteinleitung der vertikalen Abstützkraft sowie der für das Schleppen erforderlichen Längs- und Querkräfte durch die in Längsrichtung variabel fixierbare Positionierung des Stützgelenkes aktiv und im Sinne einer möglichst gleichmäßigen Achslastverteilung am Bergefahrzeug beeinflusst werden. So kann eine Beeinträchtigung des Fahrverhaltens des Bergefahrzeugs und damit auch des Gespanns durch das havarierte Fahrzeug minimiert werden. Im Ergebnis wird dadurch ein sicheres, geländetaugliches Fahrverhalten mit guter Manövrierfähigkeit erreicht. Die Position des Stützgelenkes kann dabei in der Verschieberichtung verändert und fixieret werden.

Erfindungsgemäß ist der Bergearm kardanisch gelagert.

Durch eine kardanische Lagerung kann der Bergearm gleichzeitig um rechtwinklig zueinander angeordnete Achsen bewegt werden.

In einer vorteilhaften Ausgestaltung ist der Bergearm in einem Winkelbereich, insbesondere von ±15°, relativ zur horizontalen Ausrichtung des Bergearms, um eine im Wesentlichen horizontale Nickachse frei neigbar. Auf diese Weise kann die Bewegung des havarierten Fahrzeugs um die Nickachse durch den Bergearm aufgenommen werden. Die Bewegung des Bergearms kann so allein durch die Bewegung des havarierten Fahrzeugs erfolgen, ohne dass der Bergearm durch ein Antriebsmittel der Bergevorrichtung bewegt würde.

Von weiterem Vorteil ist eine Ausgestaltung, bei welcher der Bergearm in einem Winkelbereich, insbesondere von ±7°, relativ zur horizontalen Ausrichtung des Bergearms, um eine im Wesentlichen horizontale Wankachse frei neigbar ist. Wankbewegungen in diesem Winkelbereich können so durch den Bergearm aufgenommen werden, ohne diese auf das Bergefahrzeug zu übertragen.

In diesem Zusammenhang ist es besonders vorteilhaft, wenn der Bergearm in einem Winkelbereich, insbesondere von 360°, um eine im Wesentlichen vertikale Rotationsachse frei rotierbar ist. Insbesondere während der Fahrt kann auf diese Weise die Manövrierbarkeit des Gespanns aus havariertem Fahrzeug und Bergefahrzeug verbessert werden. So kann der Bergearm während einer Kurvenfahrt eine Position einnehmen, die es dem Bergefahrzeug ermöglicht, entlang einer ersten Richtung zu fahren, während sich das havarierte Fahrzeug noch entlang einer zweiten Richtung bewegt. Die Übertragung eines entlang der Vertikalen wirkenden Moments von dem havarierten Fahrzeug auf das Bergefahrzeug kann so vermieden werden.

Erfindungsgemäß ist der Bergearm über einen Kuppelbereich mit dem Stützgelenk nach Art einer Sattelkupplung verbunden.

Über den Kuppelbereich kann der Bergearm lösbar mit dem Stützgelenk verbunden werden. Der Bergearm kann so auf schnelle und einfache Weise getauscht werden. Das Stützgelenk kann dabei um eine Nickachse und/oder um eine Wankachse neigbar sein. Dabei ist es vorteilhaft, wenn das Stützgelenk nach Art einer Sattelplatte ausgebildet ist. Bei dieser Sattelplatte kann es sich in kostengünstiger Weise um eine handelsübliche Sattelplatte handeln. Die Position der Sattelkupplung auf dem Bergefahrzeug ist dabei in einer Verschieberichtung verschiebbar.

In diesem Zusammenhang ist es besonders vorteilhaft, wenn der Kuppelbereich einen Sattelzapfen aufweist, der nach Art einer Sattelkupplung als ein rotationsbeweglicher Teil des Stützgelenks ausgebildet ist. Auf diese Weise kann der Bergearm schnell und einfach gelöst und durch einen anderen Bergearm oder eine andere mittels einer Sattelkupplung verbindbare Komponente ausgetauscht werden. Ebenso einfach kann der Bergearm an einem Fahrzeug mit Sattelkupplung befestigt werden. Das havarierte Fahrzeug kann so, z.B. nach einer erfolgten Bergung aus schwerem Gelände, von dem geländegängigen Bergefahrzeug gelöst und mit befestigtem Bergearm von einer gängigen Sattelzugmaschine über befestigte Straßen weitergeschleppt werden. Bei einem Lösen des havarierten Fahrzeugs und des Bergearms von dem Bergefahrzeug kann ein für diesen Zweck angepasstes mechanisches Hubsystem, wie es von Sattelaufliegern bekannt ist, genutzt werden. Gemäß einer konstruktiven Ausgestaltung wird vorgeschlagen, dass der Bergearm mehrschenklig, insbesondere dreischenklig ausgebildet ist. Durch die mehrschenklige Ausbildung des Bergearms kann eine kompakte Bauform des Bergearms erzielt werden. Bevorzugt weisen die einzelnen Schenkel jeweils eine im Wesentlichen plattenförmige Geometrie auf.

In vorteilhafter Weise umfasst der Bergearm einen schwenkbeweglichen Anbindungsschenkel. Durch das Verschwenken des Anbindungsschenkels kann dieser an das havarierte Fahrzeug herangeführt und dieses dann mit dem Anbindungsschenkel verbunden werden. Das havarierte Fahrzeug kann in seiner Position verbleiben, ohne dass es zur Anbindung an den Bergearm in irgendeiner Weise bewegt werden müsste. Sollte sich die Position des havarierten Fahrzeugs außerhalb des möglichen Bewegungsbereiches des Bergearmes befinden, könnte diese über eine mitführbare Winde und/oder einen Kran korrigiert werden.

In diesem Zusammenhang ist es von Vorteil, wenn der Bergearm einen Kuppelschenkel an einem dem Anbindungsschenkel gegenüberliegenden Ende des Bergearms umfasst. Der Kuppelschenkel kann die Schenkel des Bergearms mit dem Kuppelbereich und somit mit dem Stützgelenk verbinden. So kann ein möglichst großer Abstand zwischen dem Anbindungsschenkel und Kuppelschenkel erreicht werden. Auf diese Weise kann ein vorteilhafter Hebelarm bei der Rotation des havarierten Fahrzeugs um dessen Hinterräder zur Anhebung des vorderen Bereiches des havarierten Fahrzeugs bereitgestellt werden. Einer am Anbindungsschenkel wirkende Kraft kann so durch eine geringere im Bereich des Kuppelschenkels wirkende Kraft entgegengewirkt werden. Die über den Kuppelbereich und das Stützgelenk in das Heck des Bergefahrzeugs zu leitende Kraft kann verringert werden.

Weiter vorteilhaft ist es, wenn sich der Anbindungsschenkel und der Kuppelschenkel gegenüber einem Mittelschenkel des Bergearms abgewinkelt erstrecken, insbesondere auf der gleichen Seite des Mittelschenkels. Auf diese Weise kann eine günstige Einleitung der Stützkräfte erreicht werden. Der Anbindungsschenkel, der Mittelschenkel und der Kuppelschenkel können im Wesentlichen U-förmig zueinander angeordnet sein.

Bevorzugt weist der Bergearm mindestens zwei gegeneinander verschwenkbare Schenkel zum Anheben des havarierten Fahrzeugs auf. Durch gegenseitiges Verschwenken der Schenkel kann das havarierte Fahrzeug auf einfache Art und Weise angehoben werden. Insbesondere bevorzugt kann es sich bei den beiden Schenkeln um den Anbindungsschenkel und den Mittelschenkel handeln. Die Ausrichtung des Anbindungsschenkels kann dabei durch das havarierte Fahrzeug im Wesentlichen im Raum fixiert werden. Durch die fixierte Ausrichtung und durch die beim Verschwenken zwischen Anbindungsschenkels und Mittelschenkel relativ wirkenden Kräfte, kann der Mittelschenkel zusammen mit dem Anbindungsschenkel und dem havarierten Fahrzeug angehoben werden.

In einer Weiterbildung der Erfindung sind die Schenkel über ein, insbesondere teleskopierbar ausgebildetes, Betätigungselement gegeneinander verschwenkbar. Ein solches Betätigungselement kann auf technisch einfache Art beispielsweise durch ein teleskopartiges Ein- und Ausfahren, ein Bewegen einer Getriebestange oder durch Ausübung eines Drehmoments auf mindestens eine Gelenkachse eines der Schenkel, die Schenkel gegeneinander verschwenken. Bevorzugt kann es sich bei einem teleskopierbaren Betätigungselement um ein hydraulisches und/oder pneumatisches Betätigungselement handeln. Das Betätigungselement kann in vorteilhafter Weise mit einer Versorgungseinrichtung beispielsweise der Hydraulikanlage des Bergefahrzeugs verbindbar sein.

In diesem Zusammenhang hat es sich als vorteilhaft erwiesen, wenn die Hydraulik- und/oder Pneumatikleitungen bei einem Lösen des Bergearms von dem Kuppelbereich unter Speicherung des im System befindlichen Drucks, insbesondere durch Schnelltrennkupplungen, entkoppelt werden.

Eine bevorzugte Ausgestaltung sieht vor, dass der Kuppelbereich in einer zu dem Mittelschenkel parallelen, insbesondere parallel beabstandeten Ebene liegt.

Weiter vorteilhaft ist es, wenn der Kuppelschenkel, insbesondere nach Art eines Schwanenhalses, den Kuppelbereich und den Mittelschenkel verbindet. Auf diese Weise können die auf den Mittelbereich wirkenden Kräfte materialschonend in den Kuppelbereich geleitet werden. Materialschädliche Kerbwirkungen in Eckbereichen des Kuppelschenkels können durch die Ausbildung nach Art eines Schwanenhalses vermindert werden.

Eine vorteilhafte Ausgestaltung sieht eine Anbindungsvorrichtung zur Anbindung, insbesondere zu Fixierung des havarierten Fahrzeugs vor. Auf diese Weise lässt sich das havarierte Fahrzeug an den Bergearm anbinden, was ein sicheres Anheben des havarierten Fahrzeugs gestattet. Die Anbindung kann dabei beispielsweise durch Verschraubungen, Steckverbindungen, Verhakungen, Bolzenverbindungen, Verzurrung oder dergleichen erfolgen. Insbesondere durch eine Fixierung kann eine Beschädigung des Bergearms im Bereich der Anbindungsvorrichtung durch Bewegungen des havarierten Fahrzeugs vermieden werden, da sich diese nicht relativ zu Anbindungsvorrichtung bewegen kann.

In diesem Zusammenhang hat es sich als vorteilhaft erwiesen, wenn die Anbindungsvorrichtung an dem Anbindungsschenkel angeordnet ist. So lässt sich die Anbindungsvorrichtung zusammen mit dem Anbindungsschenkel durch Verschwenken an das havarierte Fahrzeug heranführen. Dabei können die Anbindungsvorrichtung und der Anbindungsschenkel auch einstückig ausgebildet sein.

Eine bevorzugte Ausgestaltung sieht vor, dass die Anbindungsvorrichtung mehrere Anbindungspunkte zur Anbindung, insbesondere zur Fixierung des havarierten Fahrzeugs aufweist. Durch diese Mehrzahl der Anbindungspunkte kann das havarierte Fahrzeug sicher angebunden werden. Dabei können die Anbindungspunkte so ausgebildet sein, dass diese redundant wirken. D.h. bei einem Versagen der Anbindung in einem Anbindungspunkt kann die Anbindung des havarierten Fahrzeugs an der Anbindungsvorrichtung durch weitere gleichwirkende Anbindungspunkte aufrechterhalten werden. Alternativ oder zusätzlich kann die Anbindung in den Anbindungspunkten auch durch sich unterscheidende Anbindungsverfahren erfolgen. Beispielsweise kann die Anbindung des havarierten Fahrzeugs bei einer Gruppe der Anbindungspunkte durch Einhaken in entsprechende Aufnahmen an dem havarierten Fahrzeug und bei einer anderen Gruppe der Anbindungspunkte durch eine Bolzenverbindung mit entsprechenden Aufnahmen an dem havarierten Fahrzeug vorgesehen sein.

Besonders bevorzugt sind die Anbindungspunkte einer Anbindungsvorrichtung zur Anbindung unterschiedlicher Fahrzeugtypen in ihrem Abstand zueinander verstellbar. Hierdurch kann die Bergevorrichtung zur Bergung eine Vielzahl unterschiedlicher Fahrzeugtypen verwendet werden. Dabei werden die Abstände der Anbindungspunkte derart angepasst, dass diese mit den Abständen entsprechender zur Bergung vorgesehener Aufnahmen am havarierten Fahrzeug korrespondieren. Hierzu können die Anbindungspunkte entlang der Anbindungsvorrichtung in ihrer Position, bevorzugt um zwei Achsen, verändert werden. Bevorzugt können die Anbindungspunkte auch quer zur Anbindungsvorrichtung, d. h. in Richtung des anzubindenden havarierten Fahrzeugs bewegt werden. Auf diese Weise kann die Anbindungsvorrichtung auch an Aufnahmen des havarierten Fahrzeugs angepasst werden, die entlang einer Anbindungsrichtung zueinander tiefenversetzt sind. Hierbei kommt unterstützend hinzu, dass insbesondere für militärische Fahrzeuge die Anbindungspunkte (z.B. Bergeösen, Zurrösen, Schleppösen, ...) in Ausführung, Position und Geometrie durch einschlägige Vorschriften vereinheitlicht sind.

In Weiterbildung der Erfindung weist die Aufnahmevorrichtung eine Aufnahme für ein weiteres Bergemodul, insbesondere eine Feststellvorrichtung auf. Durch die Aufnahmevorrichtungen können weitere funktionelle Bergmodule an den Bergearm angeordnet werden und so die Einsatzmöglichkeiten der erfindungsgemäßen Bergungsvorrichtung vergrößert werden. Das Bergemodul kann dabei beispielsweise als ein Adaptermodul für die Anbindungsvorrichtung ausgebildet sein, welches eine Anbindung von Fahrzeugen erlauben kann, deren fahrzeugseitige Aufnahmen in einem Abstand zueinander angeordnet sind, die außerhalb der Einstellmöglichkeiten der Anbindungspunkte liegen. Das Bergungsmodul kann auch zusätzlich zur Anbindungsvorrichtung wirken. Beispielsweise kann es zusätzliche Anbindungsmöglichkeiten für das havarierte Fahrzeug aufweisen, auf die Achsen und/oder die Federung des havarierten Fahrzeugs einwirken und/oder die Bergung anderweitig unterstützende Funktionen bereitstellen.

Eine weitere Ausführungsform der Erfindung sieht eine Feststellvorrichtung zur Feststellung und/oder zur Einfederung der Federbeine mindestens einer Achse, insbesondere einer gelenkten Vorderachse des havarierten Fahrzeugs vor. Durch eine Feststellung der Federbeine, insbesondere der mittels der Bergevorrichtung angehobenen Achsen, kann einem Ausfedern der Federbeine entgegengewirkt werden. Ohne eine entsprechende Feststellung würden die Federbeine während des Anhebens ausfedern. Zur Erzielung einer gewünschten Bodenfreiheit des havarierten Fahrzeugs müsste dieses um den gesamten Federweg der Federbeine zuzüglich der zu erzielenden Bodenfreiheit zwischen Untergrund und den Rädern angehoben werden. Durch die Feststellung der Federbeine kann die gewünschte Bodenfreiheit bereits durch das Anheben des havarierten Fahrzeugs um den Betrag der zu erzielenden Bodenfreiheit erzielt werden, da die Federbeine am Ausfedern gehindert werden und so ein zusätzlicher Anhebeweg um den Federweg der Federbeine nicht anfällt. Die Feststellvorrichtung kann darüber hinaus auch ein Einfedern der Federbeine bewirken. Hierdurch kann die erforderliche Anhebung des havarierten Fahrzeugs zur Erzielung einer gewünschten Bodenfreiheit zusätzlich verringert werden. So kann durch das Einfedern der Federbeine um einen Einfederweg bereits eine Bodenfreiheit zwischen den Rädern und dem Untergrund erzielt werden, die dem Einfederweg entspricht. Die gewünschte Bodenfreiheit kann so bereits durch eine Anhebung des Fahrzeugs um einen Betrag erzielt werden, welcher der um den Einfederweg verminderten gewünschten Bodenfreiheit entspricht.

Auf diese Weise kann die Silhouette des Gespanns aus Bergefahrzeug und havariertem Fahrzeug gegenüber einem gleichen Gespann ohne Feststellvorrichtung klein gehalten werden. Dies ist insbesondere in Bezug auf die Sichtbarkeit unter Gefechtsbedingungen vorteilhaft. Die Feststellvorrichtung kann dabei auch als Bergemodul ausgeführt sein.

Vorteilhaft ist es, wenn die Feststellvorrichtung unterhalb der Federbeine mindestens eine Achse des havarierten Fahrzeugs anordbar ist. So kann die Feststellvorrichtung auf einfache Weise unmittelbar auf die Achse und/oder deren Federbeine zur Feststellung und/oder Einfederung einwirken.

Eine bevorzugte Ausgestaltung sieht vor, dass die Feststellvorrichtung oberhalb der Federbeine mindestens einer Achse des havarierten Fahrzeugs anordbar ist. Auf diese Weise kann die Feststellvorrichtung auch an dem havarierten Fahrzeug angeordnet werden, wenn die Federbeine von unten nicht zugänglich sind. Des Weiteren kann hierdurch eine Verringerung der Bodenfreiheit aufgrund der Anordnung der Feststellvorrichtung vermieden werden.

Weiter vorteilhaft ist es, wenn die Feststellvorrichtung einen Radaufnehmer zur Anhebung von Rädern des havarierten Fahrzeugs, insbesondere nach Art eines Flaschenzugs aufweist. Auf diese Weise kann die Feststellung und/oder die Einfederung der Federbeine einer Achse technisch einfach über die mit der Achse verbundenen Räder erfolgen. Durch eine Ausgestaltung nach Art eines Flaschenzugs kann die hierzu erforderliche Kraft auf vorteilhafte Art und Weise reduziert werden. Der Radaufnehmer kann dabei derart modular ausgebildet sein, dass er zur Aufnahme unterschiedlicher Räder, beispielsweise mit unterschiedlichen Durchmessern und/oder unterschiedlichen Dicken, angepasst werden kann. Hierzu kann der Radaufnehmer teleskopierbare und/oder in verschiedenen Positionen arretierbare Elemente aufweisen.

Bei einer vorteilhaften Ausgestaltung der Erfindung ist die Bergevorrichtung als Moduleinheit zur Verbindung mit einem Module aufnehmenden Fahrzeug ausgebildet. Die derart ausgebildete Bergevorrichtung kann auf einfache und schnelle Weise mit einem entsprechenden zur Aufnahme von Modulen vorgesehenen Fahrzeug verbunden werden. Hierdurch kann die Bergevorrichtung relativ kurzfristig einsatzbereit gemacht und zu einem havarierten Fahrzeug verbracht werden. Aufgrund der modularen Bauweise kann es vorgesehen sein, dass die Bergevorrichtung mit Versorgungseinrichtungen, beispielsweise für Strom, Druckluft und/oder Hydraulikflüssigkeit, des aufnehmenden Fahrzeugs verbindbar ist. Auf diese Weise kann die Moduleinheit auf Komponenten des aufnehmenden Fahrzeugs zurückgreifen. In der Moduleinheit kann auf zusätzliche Komponenten, wie Strom-, Pneumatik-, und/oder Hydraulikgeneratoren, verzichtet werden, wodurch eine Gewichtsersparnis erzielt werden kann.

Gemäß einer konstruktiven Ausgestaltung wird eine im Wesentlichen T-förmige Querschnittsfläche der Moduleinheit quer zur einer Aufnahmerichtung vorgeschlagen. Durch den im Wesentlichen T-förmigen Querschnitt kann die Moduleinheit eine möglichst große Verbindungsfläche zur Verbindung mit dem aufnehmenden Fahrzeug aufweisen. Zugleich kann die Moduleinheit auf einfache Weise gegen Verrutschen quer zur Aufnahmerichtung gesichert werden.

Weiter vorteilhaft ist es, wenn die Moduleinheit zusätzlichen Bauraum für die Aufnahme von Komponenten, wie beispielsweise Elektronik, Hydraulik oder einen Ladekran umfasst. Hierdurch lässt sich das Einsatzspektrum der Moduleinheit zusätzlich erweitern. Beispielsweise kann ein Ladekran dazu verwendet werden, ein havariertes Fahrzeug in eine zur Anbindung geeignete Position zu bringen oder, insbesondere bei leichten havarierten Fahrzeugen, dieses zum Abtransport oder zur Verladung auf ein weiteres Fahrzeug gänzlich anzuheben. Der zusätzliche Bauraum kann auch eine Seilwinde aufnehmen, mit der ein havariertes Fahrzeug beispielsweise aus unzugänglichem Gelände, wie beispielsweise einem Gewässer oder einem Moor, gezogen werden kann. Durch eine Kombination von Winde und Kran kann das Einsatzspektrum der Moduleinheit dahingehend erweitert werden, dass ein havariertes Fahrzeug zunächst in eine Position gebracht wird, welche eine Anbindung der Anbindungsvorrichtung an das havarierte Fahrzeug vereinfacht bzw. ermöglicht und dieses dann zusammen mit dem Bergearm mit dem Stützgelenk verbunden wird.

Bei einem Bergefahrzeug der eingangs genannten Art wird zur Lös u n g der vorstehend genannten Aufgabe vorgeschlagen, dass dies eine Bergevorrichtung umfasst, die in der zuvor beschriebenen Weise ausgebildet ist. Hierdurch ergeben sich die im Zusammenhang mit der Bergevorrichtung beschriebenen Vorteile.

Gemäß einer vorteilhaften Ausgestaltung wird vorgeschlagen, dass ein Stützgelenk eine bei dem Bergen aufzubringende Kraft zwischen einer Vorderachse und einer Hinterachse in das Bergefahrzeug zur Erzielung einer gleichmäßigen Achslast einleitet. Auf dieser Weise können die Achsen des Bergefahrzeugs gleichmäßig belastet werden, so dass es nicht zu einer ungleichmäßigen Abnutzung kommt. Durch eine gleichmäßige Verteilung der beim Bergen aufzubringenden Kraft kann auch ein relativ schweres Fahrzeug geborgen werden, welches bei einer nicht gleichmäßigen Verteilung der Last zu einer unzulässigen Überlastung mindestens einer Achse des Bergefahrzeugs beim Anheben führen würde. Ebenfalls lässt sich hierdurch eine verbesserte Manövrierbarkeit und Stabilität des Bergefahrzeugs erzielen, da dessen angetriebenen und gelenkten Achsen in geringerem Umfang unterschiedlich belastet werden, d.h. dass der Unterschied der Belastungen klein gegenüber der Belastung der einzelnen Achsen ist, insbesondere im Bereich unter 5% liegt. Da die Stützlast einerseits maßgeblich von der Masse des havarierten Fahrzeuges abhängt und andererseits maßgeblich die resultierende Achslastverteilung des Bergefahrzeugs beeinflusst, kann durch eine in Längsrichtung des Bergefahrzeugs variable Anordnung des Stützgelenkes auch für havarierte Fahrzeuge unterschiedlicher Gewichtsklassen eine jeweils bestmögliche Achslastverteilung des Bergefahrzeugs erreicht werden.

Durch die starre Anbindung des Bergearmes am havarierten Fahrzeug ähnelt das Bergegespann einer Kombination aus Sattelzugmaschine (Bergefahrzeug) und Auflieger (Havarist mit starr angebundenem Bergearm). Die um die, insbesondere drei, senkrecht zueinander stehenden Achsen drehbare Lagerung am Bergefahrzeug ermöglicht die für ein Bergen im Gelände erforderlichen Relativbewegungen zwischen Bergefahrzeug und havarierten Fahrzeug. Die Beeinflussung des Bergefahrzeugs durch das havarierte Fahrzeug kann auf ein Minimum reduziert werden. Durch eine in Längsrichtung verschiebbare Positionierung des Stützgelenks am Bergefahrzeug kann darüber hinaus der Grad der Achslastveränderung des Bergefahrzeugs positiv beeinflusst werden. Insgesamt ergibt sich durch dieses Konzept sowohl auf befestigten Straßen als auch im Gelände ein bestmögliches Fahrverhalten hinsichtlich Dynamik und Sicherheit.

Bei einem Verfahren der eingangs genannten Art wird zur Lös u n g der voranstehend genannten Aufgabe vorgeschlagen, dass keine Momente von dem havarierten Fahrzeug auf das Bergefahrzeug übertragen werden.

Durch die Vermeidung der Übertragung von Momenten des havarierten Fahrzeugs auf das Bergefahrzeug lässt sich auf einfache Art und Weise die Geländegängigkeit des Bergfahrzeugs im Gespann mit dem havarierten Fahrzeug verbessern. So ist es möglich, dass das havarierte Fahrzeug im unebenen Gelände eine gegenüber dem Bergefahrzeug verkippte und/oder verdrehte Stellung einnimmt. Da keine Momente auf das Bergefahrzeug übertragen werden, kann sich die Stellung des havarierten Fahrzeugs nicht nachteilig auf das Fahrverhalten und die Stabilität des Bergefahrzeugs auswirken. Das über die Bergevorrichtung mit dem Bergefahrzeug gekoppelte havarierte Fahrzeug kann weiterhin durch das Bergefahrzeug abtransportiert werden.

Gemäß einer vorteilhaften Ausgestaltung wird vorgeschlagen, dass eine Achslastverteilung am Bergefahrzeug eingestellt wird. Eine derartige Achslastverteilung ergibt sich in Abhängigkeit von dem Gewicht des havarierten Fahrzeuges. Insbesondere im Bereich militärischer Fahrzeuge kann das Gewicht havarierter Fahrzeuge sehr stark schwanken. So sind im Bereich gepanzerter Radfahrzeuge Fahrzeuggewichte von 10 t bei einem 4x4-Fahrzeug ebenso anzutreffen wie solche von 40 t bei einem 8x8-Fahrzeug. Hierdurch ergeben sich an dem Bergefahrzeuge natürlicherweise stark unterschiedliche Achslasten, sobald das havarierte Fahrzeug mit dem Bergefahrzeug verbunden wurde. Durch die in Verschieberichtung variable, fixierbare und auf das Gewicht des havarierten Fahrzeugs abstimmbare, Position des Stützgelenks, über welches die für den Abschleppvorgang erforderlichen Kräfte in das Bergefahrzeug eingeleitet werden, wird eine nachteilige Beeinflussung des Fahrverhaltens durch eben jene Kräfte reduziert, da die Krafteinleitung in Nähe des Fahrzeugschwerpunktes erfolgen kann. Die Kraft kann so derart auf die Achsen des Bergefahrzeugs verteilt werden, dass sich eine gleichmäßige Achslastverteilung einstellt.

Schließlich wird in einer Ausgestaltung des Verfahrens vorgeschlagen, dass zur Anhebung des havarierten Fahrzeugs der Winkel zwischen Anbindungsschenkel und Mittelschenkel verkleinert wird.

Weitere Einzelheiten und Vorteile einer Bergevorrichtung, wie auch eines Bergefahrzeugs sowie eines Verfahrens zur Bergung eines havarierten Fahrzeugs mit einem Bergefahrzeug werden nachfolgend anhand der Darstellung der Ausführungsbeispiele in den beigefügten Zeichnungen erläutert. Darin zeigen:
- Fig. 1: ein Bergefahrzeug mit einer Bergevorrichtung in einer Seitenansicht,
- Fig. 2: eine perspektivische Ansicht des Bergefahrzeugs gemäß Fig. 1,
- Fig. 3 und 4: die Bergevorrichtung in zwei Perspektiven,
- Fig. 5: eine perspektivische Ansicht eines Gespanns, bestehend aus einem Bergefahrzeug und einem havarierten Fahrzeug vor dem Anheben,
- Fig. 6: einer der Ansicht in Fig. 5 entsprechende Darstellung mit angehobenen havarierten Fahrzeug,
- Fig. 7: eine Draufsicht auf ein Gespann nach Fig. 6 während der Fahrt,
- Fig. 8: eine perspektivische Darstellung des Gespanns nach Fig. 7,
- Fig. 9: eine Seitenansicht eines Gespanns mit einer Feststellvorrichtung nach einem ersten Ausführungsbeispiel,
- Fig. 10: eine perspektivische Darstellung der Feststellvorrichtung nach dem ersten Ausführungsbeispiel,
- Fig. 11: eine Seitenansicht eines Gespanns mit einer Feststellvorrichtung nach einem zweiten Ausführungsbeispiel,
- Fig. 12: eine perspektivische Darstellung der Feststellvorrichtung nach dem zweiten Ausführungsbeispiel,
- Fig. 13: eine Prinzipskizze mit mehreren Ansichten zur Veranschaulichung des Lösens des havarierten Fahrzeugs von dem Bergefahrzeug unter Zuhilfenahme eines mechanischen Hubsystems,
- Fig. 14: eine Prinzipskizze mit mehreren Ansichten zur Veranschaulichungen der Achslastverteilung an dem Bergefahrzeug.

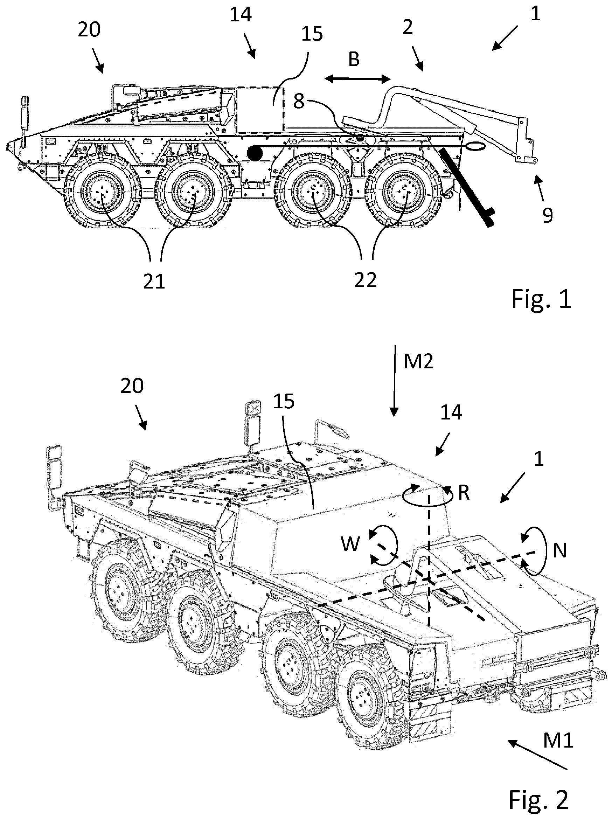

In den Fig. 1 und Fig. 2 ist ein erfindungsgemäßes Bergefahrzeug 20 in einer Seitenansicht und einer perspektivischen Ansicht dargestellt.

Das Bergefahrzeug 20 ist als 4-achsiger Radpanzer mit zwei lenkbaren Vorderachsen 21 und zwei starren Hinterachsen 22 ausgebildet. Der heckseitige Bereich des Bergefahrzeugs 20 ist derart ausgebildet, dass auf ihm eine Moduleinheit 14 angeordnet und mit dem Radpanzer verbunden werden kann. Dies erlaubt es, den Radpanzer je nach verbundener Moduleinheit 14 für unterschiedliche Aufgaben einzusetzen. Beispielsweise kann der Radpanzer durch Verwendung eines Sanitätsmoduls als Sanitätsfahrzeug, eines Kommandomoduls als Kommandofahrzeug, eines Truppenmoduls als Truppentransporter oder eines Waffenturms als Kampfpanzer oder Artilleriesystem verwendet werden. In den Darstellung handelt es sich bei der auf dem Heck des Panzers angeordneten Moduleinheit 14 um ein als Moduleinheit ausgebildete Bergevorrichtung, wodurch der Radpanzer zu einem Bergefahrzeug 20 wird.

Die Moduleinheit 14 wird entlang einer Aufnahmerichtung M1 oder M2 von dem Bergefahrzeug 20 aufgenommen und entlang der Kontaktflächen in einer nicht näher dargestellten Weise mit diesem verbunden. Die Verbindung kann sich auf eine rein mechanische Befestigung der Moduleinheit 14 auf dem Heck des Bergefahrzeugs 20 beschränken. Die Moduleinheit 14 kann darüber hinaus auch mit weiteren Komponenten des Bergefahrzeugs 20 verbunden werden, wie beispielsweise der Stromversorgung, dem hydraulischen und/oder dem pneumatischen Versorgungssystem des Bergefahrzeugs. Dabei weist die Moduleinheit 14 eine im Wesentlichen T-förmige Querschnittsfläche quer zur Aufnahmerichtung M1 auf. Das zu der Moduleinheit 14 komplementär ausgebildete Heck des Bergefahrzeugs 20 ermöglicht durch diese Form eine möglichst große Kontaktfläche zwischen dem Bergefahrzeug 20 und der Moduleinheit 14. Gleichzeitig beschränkt das Heck durch seine Formgebung die Bewegung der Moduleinheit 14 quer zur Aufnahmerichtung M1, so dass die Moduleinheit 14 gegen ein Verrutschen entlang dieser Richtung gesichert ist.

Die Moduleinheit 14 bietet zusätzlich einen Bauraum 15 zur Aufnahme von Komponenten, wie beispielsweise Elektronik, Hydraulik, einen Ladekran, eine Seilwinde oder auch eines speziellen für die Bedienung des Bergemoduls eingerichteten Arbeitsplatzes. Diese Komponenten können von der Besatzung des Bergefahrzeugs 20 zur Erfüllung einer Einsatzmission verwendet werden. Beispielsweise kann eine Seilwinde dazu genutzt werden, um ein anderes Fahrzeug aus einem unzugänglichen Gelände, wie beispielsweise ein Gewässer oder ein Moor zu ziehen. Je nach Einsatzsituation können diese Komponenten aus dem Fahrzeuginneren oder von fahrzeugaußenseitig bedient werden. Der Bauraum 15 kann alternativ oder zusätzlich auch zur Verstauung weiterer Materialien, wie beispielsweise Schaufeln, Spaten, Werkzeugen oder Ersatzteilen genutzt werden.

Die Moduleinheit 14 umfasst darüber hinaus eine zum Bergen eines nicht dargestellten havarierten Fahrzeugs 30 dienende Bergevorrichtung 1. Diese umfasst einem Bergearm 2, welcher über das Stützgelenk 8 gelenkig auf der Moduleinheit 14 und damit auf dem Heck des Bergefahrzeugs 20 angelenkt ist. Das Stützgelenk 8 kann dabei entlang einer Verschieberichtung B verschoben und in unterschiedlichen Positionen fixiert werden.

Das Stützgelenk 8 ist als Sattelplatte ausgebildet, die jeweils um eine im Wesentlichen horizontal verlaufende Nickachse N und eine im Wesentlichen horizontal verlaufende Wankachse W frei neigbar ist. Hierdurch kann der Bergearm 2 um die Nickachse N und die Wankachse W geneigt werden, ohne dass sich die dabei wirkenden Momente auf das Bergefahrzeug 20 übertragen. Das Stützgelenk 8 und damit auch der Bergearm 2 sind kardanisch gelagert, so dass unabhängig voneinander jeweils eine Bewegung um die Nickachse N und die Wankachse W erfolgen kann. Die Position des Stützgelenks 8 auf der Moduleinheit 14 ist innerhalb eines Verstellbereichs so gewählt, dass eine über den Bergearm 2 auf das Stützgelenk 8 ausgeübte Kraft derart in das Bergefahrzeug 20 eingeleitet wird, dass dessen Achsen 21, 22 gleichmäßig belastet werden.

Der Bergearm 2 ist über einen nicht näher dargestellten Sattelzapfen mit dem Stützgelenk 8 drehbeweglich gekuppelt. Der Zapfen bildet zusammen mit dem als Sattelplatte ausgebildeten Stützgelenk 8 eine Kupplung nach Art einer Sattelkupplung. Dabei ermöglicht es der Sattelzapfen, den Bergearm 2 um eine im Wesentlichen vertikal verlaufende Rotationsachse R frei zu rotieren. Insbesondere bei Kurvenfahrten ermöglicht diese Kupplung eine Verbesserung der Fahreigenschaften des Gespanns aus Bergefahrzeug 20 und havarierten Fahrzeug, wie dies weiter unten näher beschrieben wird. Ebenfalls ermöglicht diese Sattelkupplung, den Bergearm 2 auf einfache und schnelle Art und Weise von dem Stützgelenk 8 zu entkuppeln und damit zu trennen.

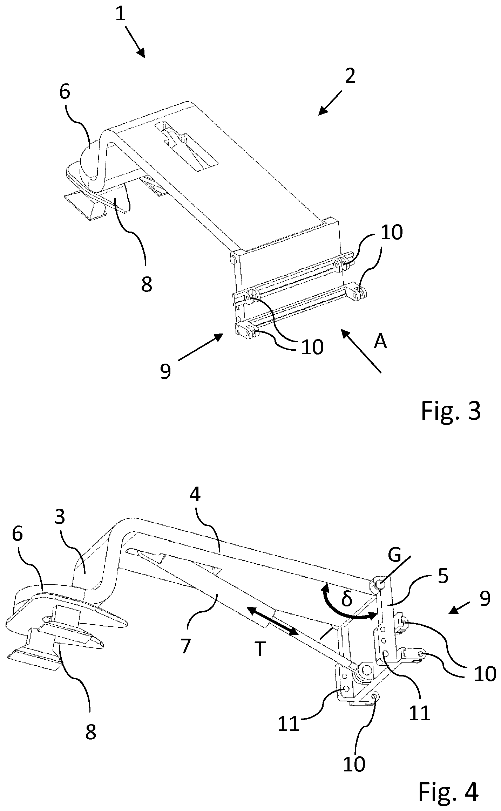

Der Aufbau der Bergevorrichtung 1 ist in Fig. 3 und Fig. 4 näher dargestellt. Gezeigt ist das als Sattelplatte ausgebildete Stützgelenk 8, mit welchem der Bergearm 2 über den nicht dargestellten Sattelzapfen gekuppelt ist.

Der Sattelzapfen ist dabei stützgelenkseitig an einem im Wesentlichen parallel zum Stützgelenk 8 verlaufenden Kuppelbereich 6 angeordnet. Über diesen Kuppelbereiche 6 erfolgt die Krafteinleitung in das Stützgelenk 8.

An den Kuppelbereich 6 schließt sich ein nach Art eines Schwanenhalses ausgebildeter Kuppelschenkel 3 an. Dieser verläuft gegenüber dem Kuppelbereich 6 abgewinkelt und entlang einer im Wesentlichen vertikalen Richtung nach oben, sprich vom Stützgelenk 8 weg. Dabei verbindet der Kuppelschenkel 3 den Kuppelbereich 6 mit einem Mittelschenkel 4 des Bergearms 2 derart, dass der Mittelschenkel 4 gegenüber dem Kuppelbereich 6 beabstandet angeordnet ist. Der Kuppelbereich 6, der Kuppelschenkel 3 und der Mittelschenkel 4 sind im gezeigten Ausführungsbeispiel einstückig ausgebildet, können jedoch auch als einzelne und miteinander verbundene Komponenten ausgebildet sein. Auch kann anstelle einer plattenförmigen Gestaltung eine Rahmen- oder Fachwerkstruktur konstruktiv umgesetzt werden.

An dem Mittelschenkel 4 ist ein Anbindungsschenkel 5 derart schwenkbeweglich um eine Gelenkachse G angelenkt, dass der Anbindungsschenkel 5 an dem zum Kuppelschenkel 3 gegenüberliegenden Ende des Bergearms 2 angeordnet ist. Zwischen dem Mittelschenkel 4 und dem Anbindungsschenkel 5 erstreckt sich ein Betätigungselement 7, über welches der Winkel δ zwischen dem Mittelschenkel 4 und dem Betätigungsschenkel 5 verändert werden kann. Zudem ist das als Teleskopelement ausgebildete Betätigungselement 7 mit einem ersten Ende schwenkbeweglich an dem Mittelschenkel 4 und mit einem zweiten Ende schwenkbeweglich an dem Anbindungsschenkel 5 angeordnet. Durch ein Teleskopieren des Betätigungselements 7 entlang einer Teleskopierrichtung T kann dessen Länge verändert werden. Eine Längenänderung des Betätigungselements 7 führt zu einem Verschwenken des Anbindungsschenkels 5 relativ zum Mittelschenkel 4 um die Gelenkachse G. Eine Verlängerung des Betätigungselements 7 führt dabei zu einer Vergrößerung des Winkels δ, während ein Verkürzen des Betätigungselements 7 diesen Winkel δ verkleinert. Der Mittelschenkel 4 weist eine Aussparung für das zylinderförmige Ende des Betätigungselements 7 auf, durch die der Bewegungsbereich des Befestigungselements 7 vergrößert wird, ohne dass dieses mit dem Mittelschenkel 4 kollidiert.

Der Kuppelschenkel 3, der Mittelschenkel 4 und der Anbindungsschenkel 5 sind jeweils im Wesentlichen plattenförmig ausgebildet, können jedoch auch in einer Rahmen- oder Fachwerkbauweise ausgebildet werden.

An dem Anbindungsschenkel 5 ist eine Anbindungsvorrichtung 9 zur Anbindung und insbesondere zur Fixierung des havarierten Fahrzeugs 30 angeordnet. Die Anbindung des havarierten Fahrzeugs 30 erfolgt dabei entlang der Anbindungsrichtung A. Die Anbindungsvorrichtung 9 und der Anbindungsschenkel 5 sind im dargestellten Ausführungsbeispiel einstückig ausgeführt.

Die Anbindungsvorrichtungen 9 weist mehrere Anbindungspunkte 10 auf, über welche das havarierte Fahrzeug 30 an die Anbindungsvorrichtung 9 und damit den Bergearm 2 angebunden werden kann. Dargestellt sind die Anbindungspunkte 10 als Bohrungen, an der das havarierte Fahrzeug mittels Schrauben, Bolzen, Seilen oder anderweitig befestigt werden kann. Die Anbindungspunkte 10 können jedoch auch von hakenförmiger Geometrie sein oder eine andere zur Anbindung des havarierten Fahrzeugs 30 geeignete Geometrie aufweisen.

Zur Anpassung an verschiedene havarierte Fahrzeugtypen können die Anbindungspunkte 10 in ihrem Abstand zueinander derart verändert werden, dass eine Anbindung an die entsprechenden Aufnahmen des havarierten Fahrzeugs 30 erfolgen kann. Die Anbindungspunkte 10 lassen sich hierzu in ihrem Abstand quer zur Anbindungsrichtung A bewegen. Zum Ausgleich eines Versatzes der Aufnahmen des havarierten Fahrzeugs 30 entlang der Anbindungsrichtung A lassen sich die Anbindungspunkte 10 auch entlang der Anbindungsrichtung A in ihrer Position verändern.

Neben den Anbindungspunkten 10 zur Anbindung des havarierten Fahrzeugs 30 weist die die Anbindungsvorrichtung Aufnahmen 11 auf, mittels derer die Anbindungsvorrichtung 9 weitere Bergemodule aufnehmen kann. Über die Aufnahmen 11 können die Bergemodule mit dem Bergearm 2 verbunden werden, beispielsweise durch Verschraubung, Steckverbindung, Bolzensicherung.

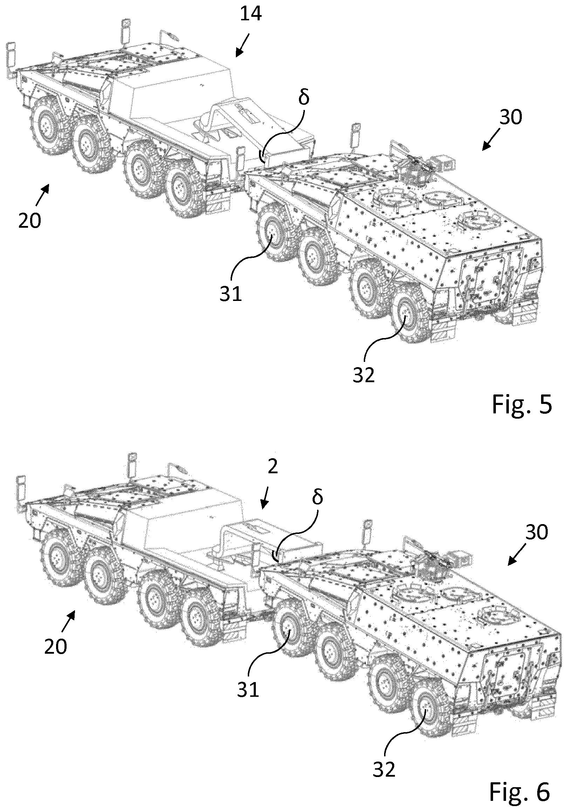

Der Vorgang zum Bergen eines havarierten Fahrzeugs 30 wird im Folgenden anhand der Figuren 5 bis 8 näher erläutert. Zunächst wird das Heck des Bergefahrzeugs 20 derart vor das havarierte und selbstständig nicht mehr fahrtüchtige Fahrzeug 30 positioniert, dass die beschädigte Seite des havarierten Fahrzeugs 30 entlang der Anbindungsrichtung A des Bergearms 2 weist. Das havarierte Fahrzeug könnte auch über die Einrichtungen des Bergefahrzeugs (Winde, Kran, etc.) in eine dementsprechende Position gebracht werden. Im dargestellten Beispiel handelt es sich hierbei um die Front des havarierten Fahrzeugs 30, die derart beschädigt ist, dass die vorderen Räder dauerhaft blockieren. Der Bergevorgang kann jedoch genauso über das Heck des havarierten Fahrzeugs 30 erfolgen, sofern dieses beschädigt sein sollte.

Hieran anschließend werden die Abstände der Anbindungspunkte 10 entsprechend der Aufnahmen des havarierten Fahrzeugs 30 angepasst. Das Bergefahrzeug 20 bewegt nun die Anbindungsvorrichtung 9 derart an das havarierte Fahrzeug 30 heran, dass eine Anbindung und insbesondere eine Fixierung über die Anbindungspunkte 10 erfolgen kann. Das Gespann aus dem Bergefahrzeug 20 und dem über die Bergevorrichtung 1 hieran angebundenen havarierten Fahrzeug ist in Fig. 5 dargestellt.

Zum Bergen wird nun das havarierte Fahrzeug 30 angehoben, wie in Fig. 6 dargestellt. Hierzu wird die Länge des Betätigungselements 7 verringert, was zu einer Verkleinerung des Winkels δ führt. Aufgrund der Masse und der starren Form des havarierten Fahrzeugs 30 wird der Anbindungsschenkel 5 im Wesentlichen in seiner Ausrichtung im Raum fixiert. Die Verringerung des Winkels δ führt daher zu einem Verschwenken des Bergearms 2 um die Nickachse N, wobei das havarierte Fahrzeug 30 durch eine Drehbewegung um eine hintere Drehachse 32 angehoben wird. Das angehobene Gewicht des havarierten Fahrzeugs 30 wird dabei über den Bergearm 2 und das Stützgelenk 8 auf dem Heck des Bergefahrzeugs 20 abgestützt. Durch dieses Anheben wird die vordere Achse 31 des havarierten Fahrzeugs 30 soweit angehoben, dass die hieran angeordneten Räder nicht mehr in Kontakt mit dem Untergrund stehen. Die blockierenden vorderen Räder stehen somit dem weiteren Bergen des havarierten Fahrzeugs 30 nicht mehr entgegen. Das Bergefahrzeug 20 kann nun das auf ihm abgestützte havarierte Fahrzeug 30 abtransportieren, wobei eine punktuelle Abstützung auf dem Bergefahrzeug 20 erfolgen kann.

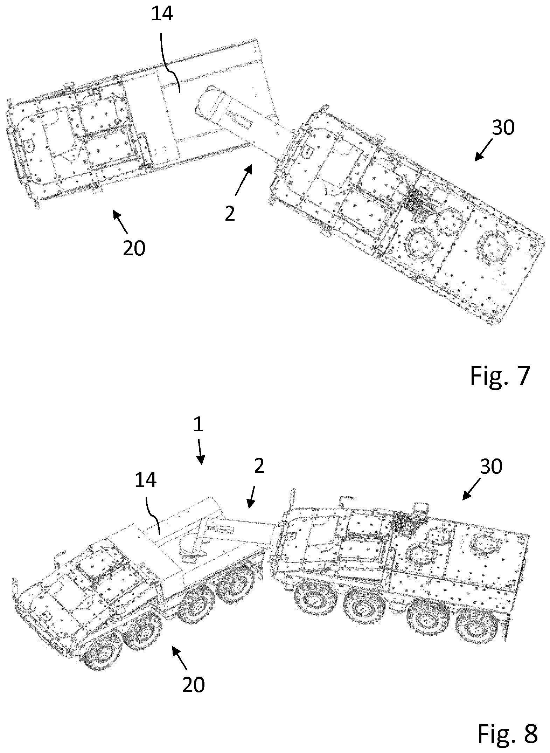

Ein solches Gespann aus dem Bergefahrzeug 20 und dem auf ihm abgestützten havarierten Fahrzeug 30 ist in den Figuren 7 und 8 dargestellt. Gezeigt ist die Stellung der beiden Fahrzeuge während einer Kurvenfahrt. Die Fahrtrichtung des Bergefahrzeugs 20 und des havarierten Fahrzeugs 30 weisen einen Winkelversatz zueinander auf. Da der Bergearm 2 über das Stützgelenk 8 beweglich um die Rotationsachse R auf dem Heck des Bergefahrzeugs 20 angelenkt ist, werden hierbei keine Drehmomente von dem havarierten Fahrzeug 30 auf das Bergefahrzeug 20 übertragen. Das freie Verschwenken des Bergearms 2 erlaubt so eine Bewegungsfreiheit hinsichtlich der Rotationsbewegungen des havarierten Fahrzeugs 30 gegenüber dem Bergefahrzeug 20. In gleicher Weise erlaubt die Beweglichkeit des Bergearms 2 um die Wankachse W und die Nickachse N ein Wanken und ein Nicken des havarierten Fahrzeugs 30, ohne dass dabei Momente auf das Bergefahrzeug 20 übertragen werden. Die Lage des havarierten Fahrzeugs 30 überträgt sich somit nicht auf das Bergefahrzeug 20. Infolgedessen wird die Manövrierbarkeit des Bergefahrzeugs 20 sowie die Manövrierbarkeit und Fahrdynamik des Bergegespannes sowohl gegenüber einer starren als auch einer über Traversen, Haken oder Seile beweglichen Verbindung zwischen einem Bergefahrzeug und einem havarierten Fahrzeug verbessert.

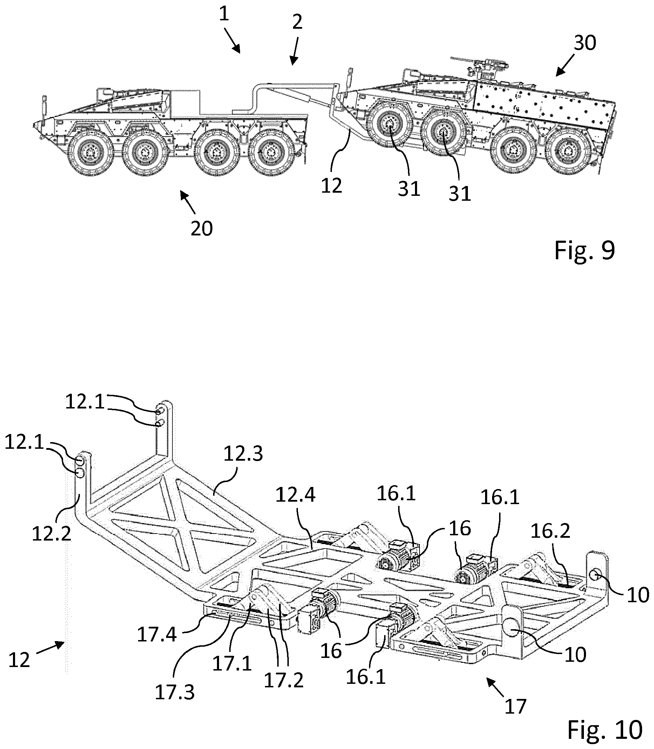

Die Darstellung in Fig. 9 zeigt ein Gespann aus einem Bergefahrzeug 20 und einem havarierten Fahrzeug 30, bei dem die Bergevorrichtung 1 eine Feststellvorrichtung 12 zur Feststellung der Federbeine der beiden Achsen 31 des havarierten Fahrzeugs 30 umfasst. Die Feststellvorrichtung 12 ist dabei unterhalb der Federbeine der Achsen 31 angeordnet.

In Fig. 10 ist die als Bergemodul ausgebildete Feststellvorrichtung 12 näher dargestellt. Über einen zweischenkligen, gabelförmig ausgebildeten Verbindungsbereich 12.2 wird die Feststellvorrichtung 12 mittels der Verbindungselemente 12.1 an den Aufnahmen 11 der Anbindungsvorrichtung 9 befestigt. Bei den Verbindungselementen 12.1 kann es sich beispielsweise um Schrauben, Bolzen, Gewindebohrungen oder Bohrlöcher handeln. Ausgehend von dem Verbindungsbereich 12.2 erstreckt sich in einem stumpfen Winkel ein plattenförmiger Verbindungsrahmen 12.3. Zur Verringerung des Gesamtgewichts ist dieser Verbindungsrahmen 12.3 fachwerkartig mit materialfreien Zwischenbereichen ausgeführt.

Der Verbindungsrahmen 12.3 ist zur Verbindung des Verbindungsbereichs 12.1 mit einem Grundrahmen 12.4 zwischen diesen beiden angeordnet. Der Grundrahmen 12.4 weist ebenfalls eine überwiegend plattenförmige Geometrie auf. Ebenso wie der Verbindungsrahmen 12.3 ist auch der Grundrahmen 12.4 zur Gewichtsreduzierung fachwerkartig ausgebildet. An dem zum Verbindungselement 12.1 gegenüberliegenden Ende des Grundrahmens 12.4 weist dieser weitere Anbindungspunkte 10 zur Anbindung an das havarierte Fahrzeug auf. Diese dienen der zusätzlichen Befestigung der Feststellvorrichtung 12 an der Unterseite des havarierten Fahrzeugs 30.

In einem mittleren Bereich des Grundrahmens 12.4 sind symmetrisch vier Motoren 16 angeordnet. Über ein Getriebe 16.1 treiben diese Motoren 16 jeweils eine drehbar gelagerte Gewindespindel 16.2 an. Abhängig von den Drehrichtungen lässt sich über die Gewindespindel 16.2 ein Kniehebel 17 derart bewegen, dass durch den Kniehebel 17 ein Federbein einer Achse 31 festgestellt und/oder eingefedert werden oder freigeben werden kann.

Hierzu besteht der Kniehebel 17 aus einem ersten Feststellschenkel 17.1, dessen erstes Ende gelenkig durch Führungsstifte 17.3 in Längsführungen 17.4 geführt und durch die Gewindespindel 16.2 angetrieben wird. Das zweite Ende des Feststellschenkels 17.1 ist gelenkig mit zwei parallel verlaufenden Feststellschenkel 17.2 verbunden. Das dem Feststellschenkel 17.1 gegenüberliegende Ende der Feststellschenkel 17.2 ist um eine Achse drehbeweglich an dem Grundrahmen 12.4 angelenkt. Durch eine Drehung der Gewindespindel 16.2 werden die beiden gegenüberliegenden Enden der Feststellschenkel 17.1 und 17.2 aufeinander zubewegt. Hierdurch werden die beiden Feststellschenkel 17.1, 17.2 zueinander gefaltet, so dass sich die beiden miteinander verbundenen Enden der Feststellschenkel 17.1 und 17.2 in einem rechten Winkel von der Gewindespindel 16.2 wegbewegen. Durch ein Umkehren der Drehrichtung der Gewindespindel 16.2 lassen sich diese Bewegungen der Feststellschenkel 17.1, 17.2 umkehren.

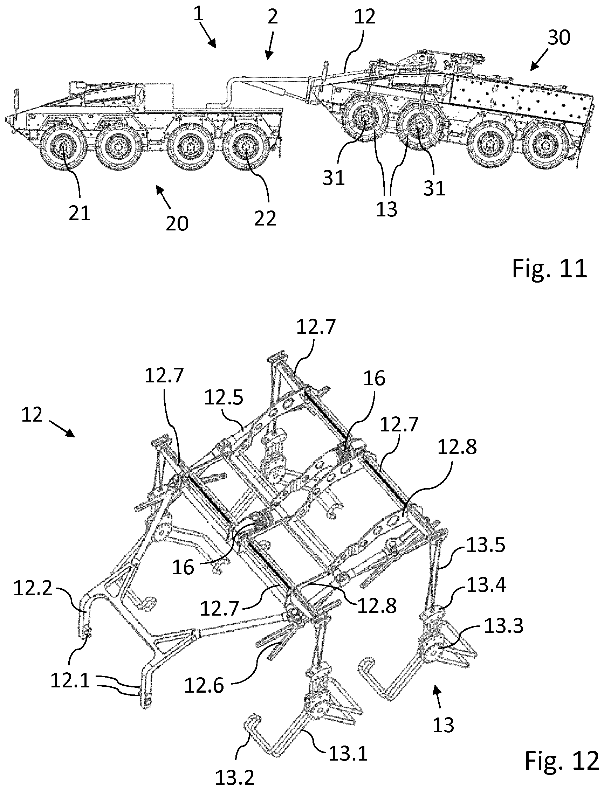

Die Darstellung in Fig. 11 zeigt ein Gespann aus einem Bergefahrzeug 20 und einem havarierten Fahrzeug 30, bei dem die Bergevorrichtung 1 eine Feststellvorrichtung 12 zur Feststellung der Federbeine der beiden Achsen 31 des havarierten Fahrzeugs 30 umfasst. Die Feststellvorrichtung 12 ist dabei oberhalb der Federbeine der Achsen 31 angeordnet und weist Radaufnehmer 13 auf.

In Fig. 12 ist die als Bergemodul ausgebildete Feststellvorrichtung 12 näher dargestellt. Über einen zweischenkligen, gabelförmig ausgebildeten Verbindungsbereich 12.2 wird die Feststellvorrichtung 12 mittels der Verbindungselemente 12.1 an den Aufnahmen 11 der Anbindungsvorrichtung 9 befestigt. Bei den Verbindungselementen 12.1 kann es sich beispielsweise um Schrauben, Bolzen, Gewindebohrungen oder Bohrlöcher handeln. Ausgehend von dem Verbindungsbereich 12.2 erstreckt sich ein gegenüber dem Verbindungsbereich 12.2 abgewinkeltes Gestell 12.5 von dem Verbindungselement 12.1 und der Anbindungsvorrichtung 9 weg. Das Gestell 12.5 ist über im Wesentlichen kreuzförmige Stützelemente 12.6 gegenüber dem havarierten Fahrzeug 30 abgestützt. Der Abstand der Stützelemente 12.6 vom Gestell 12.5 lässt sich beispielsweise über Feststellschrauben oder einstellbare Abstandselemente variabel einstellen.

Quer zur Anbindungsrichtung A erstrecken sich vier Ausleger 12.7, die über Haltearme 12.8 an dem Gestell 12.5 angeordnet sind. Die Ausleger 12.7 können quer zur Anbindungsrichtung A teleskopiert werden. Entlang der parallel zur Anbindungsrichtung A verlaufenden Mittelachse der Feststellvorrichtung 12 sind zwei Motoren 16 an den Haltearmen 12.8 angeordnet. Die Motoren 16 dienen als Aktuatoren für die an den Auslegern 12.7 angeordneten Radaufnehmer 13.

Die Radaufnehmer 13 sind nach Art zweier ein Rad umgreifender Arme ausgebildet. Jeder der Arme weist zwei in ihrer Länge einstellbare Adapterelemente 13.1, 13.2 zur Anpassung an das zu umgreifende Rad auf. Die Adapterelemente 13.1, 13.2 können diskret anhand einzelner Raststellungen oder kontinuierlich eingestellt werden. Die ersten Adapterelemente 13.1 werden auf den äußeren Radius des zu umgreifenden Rades eingestellt, während die zweiten Adapterelemente 13.2 auf die Dicke des Rades quer zu dessen Lauffläche eingestellt werden. Die Adapterelemente 13.1 können in ihrer Winkelposition um eine sie miteinander verbindende Nabenplatte 13.3 verändert werden, so dass die Adapterelemente 13.1 in unterschiedlichen Winkeln zueinander das Rad umgreifen können. Auf diese Weise lässt sich der Radaufnehmer 13 an Räder unterschiedlichen Durchmessers und Dicke anpassen.

Zur Adaptierung der Feststellvorrichtung 12 an havarierte Fahrzeuge 30 unterschiedlicher Spurweite werden die Ausleger 12.7 auf die jeweilige Spurweite des havarierten Fahrzeugs 30 ausgezogen und arretiert.

Zur Feststellung und/oder Einfederung der Federbeine des havarierten Fahrzeugs 30 werden die an die Räder angepassten Radaufnehmer 13 durch einen Flaschenzug 13.4 abgesenkt, so dass die Radaufnehmer 13 die Räder von unten umgreifen können. Bei einem korrekten Umgreifen der Räder durch die Arme der Radaufnehmer 13 kommt die Nabenplatte 13.3 über der Radnabe zum Liegen, so dass die ausgeübten Kräfte gleichmäßig vom Flaschenzug 13.4 über die Nabenplatte 13.3 auf die Räder und die Federbeide der Achse 31 übertragen werden. Bei der Feststellung und/oder der Einfederung rollen die Motoren 16 Seile 13.5 auf, so dass die Flaschenzüge 13.4 die Radaufnehmer 13 und damit die Achsen 31 mit einem vorteilhaften Kraftübersetzungsverhältnis anheben und so deren Federbeine abhängig vom Anhebeweg der Radaufnehmer 13 feststellen oder einfedern.

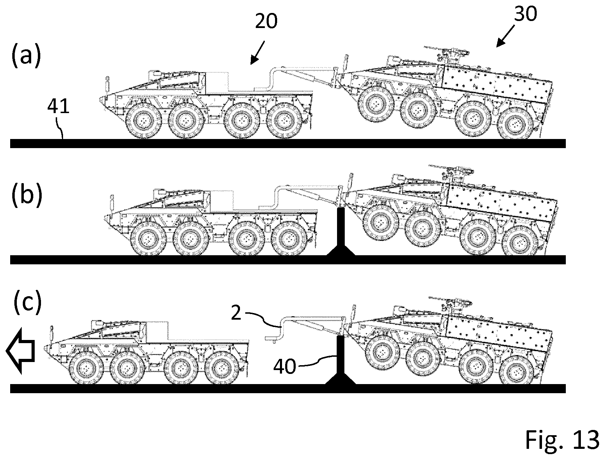

In der Fig. 13 ist das Lösen des havarierten Fahrzeugs 30 zusammen mit dem an ihm angebundenen Bergearm 2 von dem Bergefahrzeug 20 gezeigt. Das Bergefahrzeug 20 schleppt das havarierte Fahrzeug zunächst aus dem schweren Gelände in einen Bereich mit möglichst flachem und befestigtem Boden 41, wie beispielsweise eine Straße, vgl. Fig. 13 (a).

Unterhalb des Bergearms 2, vorzugsweise im Bereich der Anbindungsvorrichtung 9, wird ein mechanisches Hubsystem 40, wie es von Sattelaufliegern bekannt ist, auf dem Boden 41 aufgestellt, vgl. Fig. 13 (b). Der Bergearm 2 wird nun zusammen mit dem havarierten Fahrzeug auf das mechanische Hubsystem 40 abgesenkt. Alternativ kann das mechanische Hubsystem 40 auch durch eine Pneumatik, eine Hydraulik, mechanisch oder auf andere Weise angehoben werden. In dieser Position stützt das mechanische Hubsystem 40 den Bergearm 2 sowie das havarierte Fahrzeug 30 ab, wodurch das Stützgelenk 8 entlastet wird.

Wie in Fig. 13 (c) zu sehen ist, kann der Bergearm 2 nun vom Stützgelenk 8 gelöst werden. Das Bergefahrzeug 20 kann sich nun entlang der Pfeilrichtung wegbewegen, während der Bergearm 2 und das havarierte Fahrzeug 30 in ihre Position verbleiben. Ausgehend von dieser Position kann der Bergearm 2 zusammen mit dem havarierten Fahrzeug 30 an eine nicht gezeigte herkömmliche Sattelzugmaschine zum Weitertransport über eine befestigte Straße befestigt werden. Hierzu würde sich die Sattelzugmaschine rückwärts und entgegen der in Fig. 13 (c) gezeigten Pfeilrichtung an den Bergearm 2 heranbewegen und diesen ankoppeln.

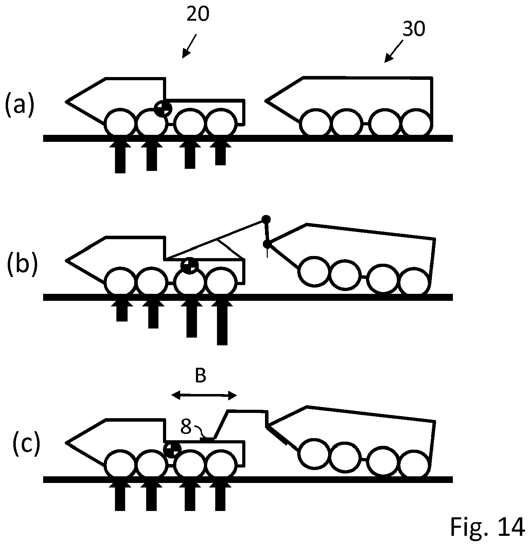

In Fig. 14 ist die Achslastverteilung an dem Bergefahrzeug 20 veranschaulicht. Die Länge der Pfeile kennzeichnet dabei die jeweilig auf eine Achse wirkende Last und die Position des Kreises den Fahrzeugschwerpunkt. Fig. 14 (a) zeigt die Achslastverteilung ohne angebundenes havariertes Fahrzeug 30. Der Fahrzeugschwerpunkt liegt zwischen den beiden mittleren Achsen, so dass die beiden vorderen Achsen etwas stärker belastet sind als die hinteren.

Fig. 14 (b) zeigt ein konventionelles Schleppsystem, wie es dem Stand der Technik entspricht. Die Last wird ungleichmäßig auf die Achsen verteilt, so dass sich der Fahrzeugschwerpunkt in Richtung des Fahrzeughecks verschiebt und die hinteren Achsen übermäßig belastet werden.

Die Fig. 14 (c) zeigt ein erfindungsgemäßes Bergefahrzeug 20, bei welchem die Last über das Stützgelenk 8 gleichmäßig auf alle Achsen verteilt wird. Der Fahrzeugschwerpunkt befindet sich vorteilhaft in mittleren Bereich des Bergefahrzeugs 20. Abhängig vom Gewicht des havarierten Fahrzeugs 30 lässt sich das Stützgelenk 8 entlang einer parallel zur Fahrzeugachse verlaufenden Verschieberichtung B axial bewegen, so dass sich die gezeigte Achslastverteilung des Bergefahrzeugs 20 für unterschiedlich schwere havarierte Fahrzeuge einstellen lässt.

### Bezugszeichen:

- 1: Bergevorrichtung
- 2: Bergearm
- 3: Kuppelschenkel
- 4: Mittelschenkel
- 5: Anbindungsschenkel
- 6: Kuppelbereich
- 7: Betätigungselement
- 8: Stützgelenk
- 9: Anbindungsvorrichtung
- 10: Anbindungspunkt
- 11: Aufnahme
- 12: Feststellvorrichtung
- 12.1: Verbindungselement
- 12.2: Verbindungsbereich
- 12.3: Verbindungsrahmen
- 12.4: Grundrahmen
- 12.5: Gestell
- 12.6: Stützelement
- 12.7: Ausleger
- 12.8: Haltearme
- 13: Radaufnehmer
- 13.1: Adapterelement
- 13.2: Adapterelement
- 13.3: Nabenplatte
- 13.4: Flaschenzug
- 13.5: Seil
- 14: Moduleinheit
- 15: Bauraum
- 16: Motor
- 16.1: Getriebe
- 16.2: Gewindespindel
- 17: Kniehebel
- 17.1: Feststellschenkel
- 17.2: Feststellschenkel
- 17.3: Führungsstift
- 17.4: Längsführung
- 20: Bergefahrzeugs
- 21: Vorderachse des Bergefahrzeugs
- 22: Hinterachse des Bergefahrzeugs
- 30: havariertes Fahrzeug
- 31: Achse des havarierten Fahrzeugs
- 32: Drehachse des havarierten Fahrzeugs
- 40: mechanisches Hubsystem
- 41: Boden

- A: Anbindungsrichtung
- B: Verschieberichtung
- G: Gelenkachse
- M1: Aufnahmerichtung
- M2: Aufnahmerichtung
- N: Nickachse
- R: Rotationsachse
- T: Teleskopierrichtung
- W: Wankachse
- δ: Winkel

## Patentansprüche

1. Bergevorrichtung zur Anordnung auf einem Bergefahrzeug (20), insbesondere auf dem Heck eines militärischen Bergefahrzeugs, mit einem Bergearm (2) zum Anheben eines havarierten Fahrzeugs (30) und einem Stützgelenk (8) zur gelenkigen Abstützung des Bergearms (2) auf dem Bergefahrzeug (20), wobei der Bergearm (2) kardanisch gelagert und über das Stützgelenk (8) um mindestens drei Achsen (N, W, R) beweglich gegenüber dem Bergefahrzeug (20) lagerbar ist, **dadurch gekennzeichnet,**
**dass** das Stützgelenk (8) entlang einer Verschieberichtung (B) verschiebbar ist, wobei der Bergearm (2) über einen Kuppelbereich (6) mit dem Stützgelenk (8) nach Art einer Sattelkupplung verbunden ist.

2. Bergevorrichtung nach einem der vorangegangenen Ansprüche,
**dadurch gekennzeichnet, dass** der Bergearm (2) einen schwenkbeweglichen Anbindungsschenkel (5) zur Verbindung mit dem havarierten Fahrzeug (30) umfasst.

3. Bergevorrichtung nach Anspruch 2, **dadurch gekennzeichnet, dass** der Bergearm (2) einen Kuppelschenkel (3) an einem dem Anbindungsschenkel (5) gegenüberliegenden Ende des Bergearms (2) zur Verbindung des Kuppelbereichs (6) mit dem Anbindungsschenkel (5) umfasst.

4. Bergevorrichtung nach Anspruch 3, **dadurch gekennzeichnet, dass** sich der Anbindungsschenkel (5) und der Kuppelschenkel (3) gegenüber einem Mittelschenkel (4) des Bergearms (2) abgewinkelt erstrecken, insbesondere auf der gleichen Seite des Mittelschenkels (4).

5. Bergevorrichtung nach einem der Ansprüche 2 bis 4, **dadurch gekennzeichnet, dass** der Bergearm (2) mindestens zwei gegeneinander verschwenkbare Schenkel (3, 4, 5) zum Anheben des havarierten Fahrzeugs aufweist.

6. Bergevorrichtung nach Anspruch 5, **dadurch gekennzeichnet, dass** die Schenkel (3, 4, 5) über ein, insbesondere teleskopierbar ausgebildetes, Betätigungselement (7) gegeneinander verschwenkbar sind.

7. Bergevorrichtung nach einem der vorangegangenen Ansprüche, **gekennzeichnet durch** eine Anbindungsvorrichtung (9), wobei Anbindungspunkte (10) der Anbindungsvorrichtung (9) zur Anbindung unterschiedlicher Fahrzeugtypen in ihrem Abstand zueinander verstellbar sind.

8. Bergevorrichtung nach Anspruch 7, **dadurch gekennzeichnet, dass** die Anbindungsvorrichtung (9) eine Aufnahme (11) für ein weiteres Bergemodul, insbesondere eine Feststellvorrichtung (12) aufweist.

9. Bergevorrichtung nach einem der vorangegangenen Ansprüche, **gekennzeichnet durch** eine Feststellvorrichtung (12) zur Feststellung und/oder zur Einfederung von Federbeinen mindestens einer Achse (31), insbesondere einer gelenkten Vorderachse, des havarierten Fahrzeugs (30).

10. Bergevorrichtung nach Anspruch 9, **dadurch gekennzeichnet, dass** die Feststellvorrichtung (12) einen Radaufnehmer (13) zur Anhebung von Rädern des havarierten Fahrzeugs (30), insbesondere nach Art eines Flaschenzugs aufweist.

11. Bergevorrichtung nach einem der vorangegangenen Ansprüche, **dadurch gekennzeichnet, dass** die Bergevorrichtung (1) als Moduleinheit (14) zur Verbindung mit einem Module aufnehmenden Fahrzeug (20) ausgebildet ist.

12. Bergefahrzeug (20), insbesondere militärisches Bergefahrzeug, **gekennzeichnet durch**
eine Bergevorrichtung (1) nach einem der vorangegangenen Ansprüche.

## Claims

1. Recovery device for arrangement on a recovery vehicle (20), in particular on the rear of a military recovery vehicle, having a recovery arm (2) for lifting a damaged vehicle (30) and a support joint (8) for jointed support of the recovery arm (2) on the recovery vehicle (20), the recovery arm (2) being cardanically mounted and being mountable via the support joint (8) such that the recovery arm (2) is movable relative to the recovery vehicle (20) about at least three axes (N, W, R),
**characterized in that**
the support joint (8) is displaceable along a displacement direction (B), the recovery arm (2) being connected to the support joint (8) via a coupling region (6) in the manner of a fifth wheel coupling.

2. Recovery device according to one of the preceding claims, **characterized in that** the recovery arm (2) comprises a pivotable connecting limb (5) for connection with the damaged vehicle (30).

3. Recovery device according to claim 2, **characterized in that** the recovery arm (2) comprises a coupling limb (3) at an end of the recovery arm (2) opposite the connecting limb (5) for connecting the coupling region (6) to the connecting limb (5).

4. Recovery device according to claim 3, **characterized in that** the connecting limb (5) and the coupling limb (3) extend at an angle relative to a central limb (4) of the recovery arm (2), in particular on the same side of the central limb (4).

5. Recovery device according to one of claims 2 to 4, **characterized in that** the recovery arm (2) has at least two legs (3, 4, 5) for lifting the damaged vehicle which can be pivoted relative to one another.

6. Recovery device according to claim 5, **characterized in that** the legs (3, 4, 5) can be pivoted relative to one another via an actuating element (7), in particular a telescopable actuating element (7).

7. Recovery device according to one of the preceding claims, **characterized by** a connecting device (9), wherein connecting points (10) of the connecting device (9) for connecting different types of vehicles are adjustable in their distance relative to one another.

8. Recovery device according to claim 7, **characterized in that** the connecting device (9) has a receptacle (11) for a further recovery module, in particular a locking device (12).

9. Recovery device according to one of the preceding claims, **characterized by** a locking device (12) for locking and/or for spring compression of spring struts of at least one axle (31), in particular a steered front axle, of the damaged vehicle (30).

10. Recovery device according to claim 9, **characterized in that** the locking device (12) has a wheel pick-up (13), in particular in the manner of a pulley, for lifting wheels of the damaged vehicle (30).

11. Recovery device according to one of the preceding claims, **characterized in that** the recovery device (1) is designed as a module unit (14) for connection with a module-receiving vehicle (20).

12. Recovery vehicle (20), in particular a military recovery vehicle, **characterized by**
a recovery device (1) according to one of the preceding claims.

## Revendications

1. Dispositif de sauvetage destiné à être agencé sur un véhicule de sauvetage (20), notamment à l'arrière d'un véhicule de sauvetage militaire, avec un bras de sauvetage (2) pour soulever un véhicule avarié (30) et une articulation de support (8) pour supporter de manière articulée le bras de sauvetage (2) sur le véhicule de sauvetage (20), le bras de sauvetage (2) étant monté à la cardan et pouvant être monté de manière mobile par rapport au véhicule de sauvetage (20) par l'intermédiaire de l'articulation de support (8) autour d'au moins trois axes (N, W, R), 12
**caractérisé en ce que**
l'articulation de support (8) peut être déplacée le long d'une direction de déplacement (B), le bras de sauvetage (2) étant relié par l'intermédiaire d'une zone d'accouplement (6) à l'articulation de support (8) à la manière d'une sellette d'attelage.

2. Dispositif de sauvetage selon l'une quelconque des revendications précédentes, **caractérisé en ce que** le bras de sauvetage (2) comprend une branche d'attache mobile en pivotement (5) pour la liaison avec le véhicule avarié (30).

3. Dispositif de sauvetage selon la revendication 2, **caractérisé en ce que** le bras de sauvetage (2) comprend une branche d'accouplement (3) à une extrémité du bras de sauvetage (2) opposée à la branche d'attache (5) pour relier la zone d'accouplement (6) à la branche d'attache (5).

4. Dispositif de sauvetage selon la revendication 3, **caractérisé en ce que** la branche d'attache (5) et la branche d'accouplement (3) s'étendent en formant un angle par rapport à une branche centrale (4) du bras de sauvetage (2), notamment du même côté de la branche centrale (4).

5. Dispositif de sauvetage selon l'une quelconque des revendications 2 à 4, **caractérisé en ce que** le bras de sauvetage (2) présente au moins deux branches (3, 4, 5) pouvant pivoter l'une par rapport à l'autre pour soulever le véhicule avarié.

6. Dispositif de sauvetage selon la revendication 5, **caractérisé en ce que** les branches (3, 4, 5) peuvent pivoter les unes par rapport aux autres par l'intermédiaire d'un élément d'actionnement (7), notamment réalisé sous forme télescopique.

7. Dispositif de sauvetage selon l'une quelconque des revendications précédentes, **caractérisé par** un dispositif d'attache (9), des points d'attache (10) du dispositif d'attache (9) étant réglables en distance les uns par rapport aux autres pour l'attache de différents types de véhicules.

8. Dispositif de sauvetage selon la revendication 7, **caractérisé en ce que** le dispositif d'attache (9) présente un logement (11) pour un autre module de sauvetage, notamment un dispositif d'immobilisation (12).

9. Dispositif de sauvetage selon l'une quelconque des revendications précédentes, **caractérisé par** un dispositif d'immobilisation (12) pour immobiliser et/ou comprimer des jambes de suspension d'au moins un essieu (31), notamment un essieu avant directeur, du véhicule (30) avarié.

10. Dispositif de sauvetage selon la revendication 9, **caractérisé en ce que** le dispositif d'immobilisation (12) présente un capteur de roue (13) pour soulever des roues du véhicule avarié (30), notamment à la manière d'un palan.

11. Dispositif de sauvetage selon l'une quelconque des revendications précédentes, **caractérisé en ce que** le dispositif de sauvetage (1) est réalisé sous forme d'unité modulaire (14) destinée à être reliée à un véhicule (20) recevant des modules.

12. Véhicule de sauvetage (20), notamment véhicule de sauvetage militaire, **caractérisé par**
un dispositif de sauvetage (1) selon l'une quelconque des revendications précédentes.
